# EUROPÄISCHE PATENTSCHRIFT

(11) **EP 0 987 433 B1**
(45) Veröffentlichungstag und Bekanntmachung des Hinweises auf die Patenterteilung: **08.08.2001**
(21) Anmeldenummer: 99117555.5
(22) Anmeldetag: 06.09.1999
(51) Int. Cl.: F02N 11/04

(54) **Starter-Generator für ein Kraftfahrzeug**
Starter-Alternator for a vehicle
Démarreur-Alternateur pour un véhicule

(30) Priorität: 18.09.1998 DE 19842928; 08.04.1999 DE 29906313 U
(43) Veröffentlichungstag der Anmeldung: 22.03.2000
(60) Teilanmeldung: 00120318.1
(73) Patentinhaber: SIEMENS AKTIENGESELLSCHAFT, 80333 München (DE)
(72) Erfinder: Schäfer, Heinz, Dr., 97230 Estenfeld (DE); Wähner, Ludwig, 97234 Reichenberg (DE); Altenbernd, Gerald, Dr., 30455 Hannover (DE)

(56) Entgegenhaltungen:
- EP-A- 0 103 821
- EP-A- 0 151 935
- WO-A-94/07025
- DE-A- 4 423 577
- FR-A- 2 739 505
- US-A- 5 734 217

## Beschreibung

Die Erfindung bezieht sich auf einen Starter-Generator für ein Kraftfahrzeug gemäß Patentanspruch 1. Derartige Starter-Generatoren übernehmen einerseits die Funktion eines sonst üblichen Anlassers mit nachgeschaltetem Getriebe als auch die Funktion einer davon gesonderten Lichtmaschine zur Ladung der Batterie. Starter-Generatoren dieser Art sind üblicherweise zwischen Verbrennungsmaschine einerseits und Getriebe bzw. Getriebeautomatik andererseits koaxial zur Kurbelwelle in direkter Verbindung oder in kuppelbarer Verbindung zu dieser angeordnet (EP 0 103 821 B1; WO 94/07025).

Durch die DE 44 23 577 A1 ist ein aktives Schwingungsdämpfersystem mit einer ein Schwungrad aufweisenden Kurbelwelle eines Kraftfahrzeuges bekannt, wobei das Schwungrad als bewegtes Element einer elektrischen Linearmaschine ausgebildet ist und dem axial beidseitig je Statorspulen zugeordnet sind; dieses Schwingungsdämpfersystem kann auch als Anlasser sowie als Lichtmaschine arbeiten und sowohl als Gleichstrom-, Wechselstrom-, oder Drehstrommaschine ausgebildet sein.

Aus US-A-5 734 217, das als nächstliegender Stand der Technik angesehen wird, ist ein Starter-Generator für ein Kraftfahrzeug bekannt mit einer Asynchronmaschine mit Scheibenläufer ; mit einem Scheibenläufer mit in einem Läuferblechpaket angeordneter Käfigwicklung ; mit einem dem Scheibenläufer zugeordneten Ständer mit in einem Ständerblechpaket angeordneter Ständerwicklung ; mit jeweils axial beidseitig des Scheibenläufers angeordneten ersten Ständerteil bzw. zweiten Ständerteil.

Gemäß Aufgabe vorliegender Erfindung soll ein kostengünstiger, kleinbauender betriebssicherer Starter-Generator höchster Leistungsdichte geschaffen werden, der auch für generatorische Leistungen von mehr als 4 kW, d.h. insbesondere für Kraftfahrzeuge der oberen Mittelklasse und Oberklasse, verwendbar ist.

Die Lösung der vorgenannten Aufgabe gelingt erfindungsgemäß durch einen Starter-Generator gemäß Patentanspruch 1; vorteilhafte Ausgestaltungen der Erfindung sind jeweils Gegenstand der Unteransprüche.

Durch Verwendung einer Asynchronmaschine in Scheibenläuferbauart läßt sich bei einfacher und energiesparender Bauweise eine leichte, insbesondere feldorientierte Regelung sowie ein auch bei hoher Leistungsdichte kurzschlußfester und überhitzungsbeständiger Starter-Generator mit geringen Wirbelstromverlusten schaffen; durch die Aufteilung des Stators in je einen Statorteil axial beidseitig des Scheibenläufers sind bei gezielter entsprechender Auslegung axial einseitige Zugkräfte auf den Läufer und damit gegebenenfalls auf die Kurbelwelle des Verbrennungsmotors vermeidbar. Zur Erhöhung der Leistungsdichte weist der Scheibenläufer in einer ersten axialen Ebene erste, dem ersten Statorteil zugeordnete bzw. zugewandte Kurzschlußstäbe und in einer zweiten axialen Ebene zweite, dem zweiten Statorteil zugeordnete bzw. zugewandte Kurzschlußstäbe auf; im Sinne einer geringen Drehmomentenwelligkeit und kompakten Bauweise sind in vorteilhafter Weise die ersten Kurzschlußstäbe gegenüber den zweiten Kurzschlußstäben tangential versetzt.

Regelungstechnisch ist für den erfindungsgemäßen Starter-Generator in vorteilhafter Weise eine feldorientierte Regelung von zwei parallelgeschalteten Asynchronmaschinen zugrundegelegt. In gleicher Weise wirkend ist nach einer weiteren Ausgestaltung ein tangentialer Versatz der Nuten und damit der von diesen aufgenommenen Wicklung des ersten Ständerbauteils gegenüber den Nuten des zweiten Ständerbauteils vorgesehen.

Zur Gewährleistung eines sicheren Betriebseinsatzes, insbesondere bei Aufnahme des Scheibenläufers eines Starter-Generators auf bzw. von der Kurbelwelle einer Kfz-Verbrennungsmaschine, ist es zweckmäßig, den Luftspalt zwischen Scheibenläufer und Ständer zumindest nach radial außen derart zu erweitern, daß Taumelbewegungen der Kurbelwelle und ein entsprechender Seiten-Schlag des rotierenden Scheibenläufers nicht zu einer Berührung mit den Ständerteilen führt; eine nach radial außen kegelförmige Erweiterung des Luftspalts vereinigt in vorteilhafter Weise den für ein hohes Moment vorteilhaften engen Luftspalt mit der mit zunehmendem radialen Abstand zur Kurbelwelle ansteigenden Taumelausschlagsgefahr.

Aufgrund des geringen Läuferträgheitsmomentes und des kompakten Einbauraums ist nach einer Ausgestaltung der Erfindung weiterhin vorgesehen, den erfindungsgemäßen Starter-Generator nicht zwischen Verbrennungsmaschine und axial nachgeordnetem Schaltgetriebe bzw. Automatikgetriebe sondern in schwingungstechnisch besonders vorteilhafter Weise an dem kühlerseitigen Ende der Kurbelwelle der Verbrennungsmaschine anzuordnen; diese Variante bringt zusätzlich entscheidende Vorteile hinsichtlich Montage und Wartung.

Die Erfindung sowie weitere vorteilhafte Ausgestaltungen der Erfindung werden im folgenden anhand schematischer Ausführungsbeispiele in der Zeichnung näher erläutert; darin zeigen:
- FIG 1: in einem axialen Schnittbild einen zwischen einer Verbrennungsmaschine und einem Getriebe konzentrisch zur Kurbelwelle angeordneten Starter-Generator als Asynchronmaschine mit Scheibenläufer und axial beidseitig angeordneten Ständerteilen;
- FIG 2: in einem perspektivischen Schnittbild den Scheibenläufer des Starter-Generators gemäß FIG 1;
- FIG 3: die Draufsicht auf die unbewickelten Blechpakete des Scheibenläufers und der axial beidseitig angeordneten Ständerteile eines Starter-Generators mit tangential gegeneinander versetzten Nuten des einen Ständerteils gegenüber dem anderen Ständerbauteil;
- FIG 4: die Draufsicht auf die unbewickelten Blechpakete des Scheibenläufers und der axial beidseitig angeordneten Ständerteile eines Starter-Generators mit nach radial außen kegelförmig erweitertem Luftspalt;
- FIG 5: die Draufsicht auf die unbewickelten Blechpakete des Scheibenläufers und der axial beidseitig angeordneten Ständerteile eines Starter-Generators mit gebrochenen Leiterzahlen pro Pol bzw. Polpaar für zumindest einen Wicklungsstrang und dementsprechend ungleich großen Nuten;
- FIG 6: eine axiale Draufsicht auf ein Statorteil-Blech eines axial geschichteten Blechpaketes mit einer Nutausbildung und Wicklungsverteilung für einen Starter-Generator mit gebrochener Leiterzahl pro Pol bzw. Polpaar für zumindest einen Wicklungsstrang in sinngemäßer konstruktiver Nutanordnung gemäß FIG 5;
- FIG 7: eine erste Anordnung des erfindungsgemäßen Starter-Generators zwischen Verbrennungsmaschine und axial nachgeschaltetem Getriebe;
- FIG 8: eine zweite Anordnung des erfindungsgemäßen Starter-Generators an dem kühlerseitigen, dem Getriebe abgewandten Ende der Verbrennungsmaschine.

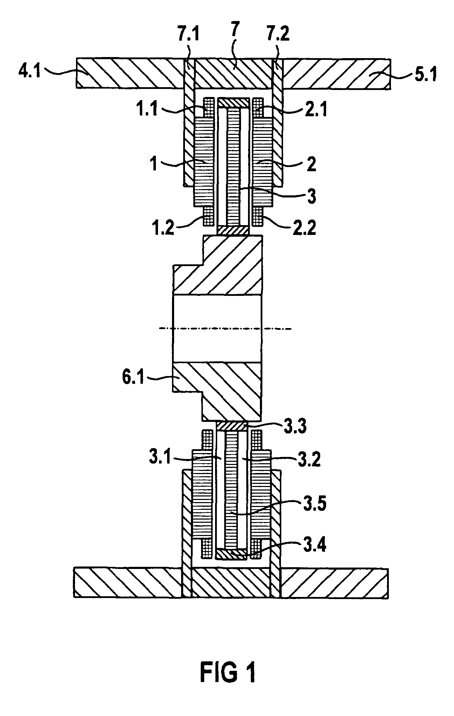

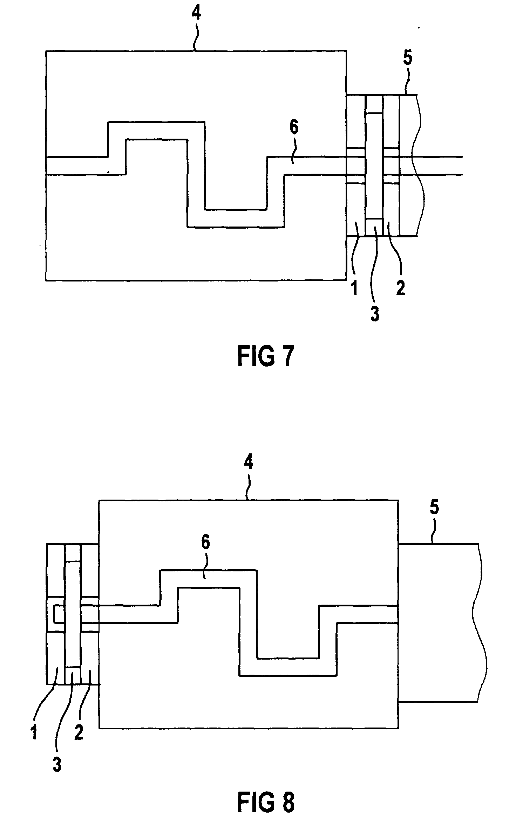

FIG 1 zeigt im Axialschnitt einen erfindungsgemäßen Starter-Generator, der gemäß FIG 7 axial zwischen einer Verbrennungsmaschine 4 einerseits und einem Getriebe 5, insbesondere Automatikgetriebe, andererseits angeordnet ist. Der Scheibenläufer 3 des Starter-Generators in Asynchronmaschinenbauart ist konzentrisch zur Kurbelwelle 6 der Verbrennungsmaschine 4 mittels eines Kurbelwellenflansches 6.1 gehaltert. Axial beidseitig zu dem Scheibenläufer 3 ist jeweils ein erster Ständerteil 1 am Maschinengehäuse 4.1 der Verbrennungsmaschine 4 und ein zweiter Ständerteil 2 am Getriebegehäuse 5.1 des Getriebes 5 gehaltert.

Der Scheibenläufer 3 ist als Käfigläufer mit von einem geblechten Läuferblechpaket 3.5 aufgenommenen Läuferkurzschlußstäben 3.1;3.2 und diese radial endseitig verbindendem radial innerem Kurzschlußring 3.3 und radial äußerem Kurzschlußring 3.4 ausgebildet.

Axial beidseitig zu dem Scheibenläufer 3 ist jeweils mittels einer Halterung 7 an deren Halterungsarmen 7.1 bzw.7.2 ein erster Ständerteil 1 und jeweils ein zweiter Ständerteil 2 fixierbar; von den Ständerteilen 1;2 sind hier jeweils ein Ständerblechpaket 1.3 bzw.2.3 mit darin zur Aufnahme einer Statorwicklung vorgesehenen, hier nur im ersten Ständerteil 1 eingezeichneten Nuten 1.31 und radial endseitigen Wicklungsköpfen 1.1;1.2 bzw.2.1;2.2 dargestellt.

Wie anhand des Läuferblechpaketes 3.5 sowie der Ständerblechpakete 1.3 des ersten Ständerteils 1 zeichnerisch angedeutet, ist die geblechte Ausführungsform in fertigungstechnisch vorteilhafter Weise durch spiralförmiges Rollen eines der jeweils axialen Höhe der Blechpakete entsprechenden Blechbandes hergestellt.

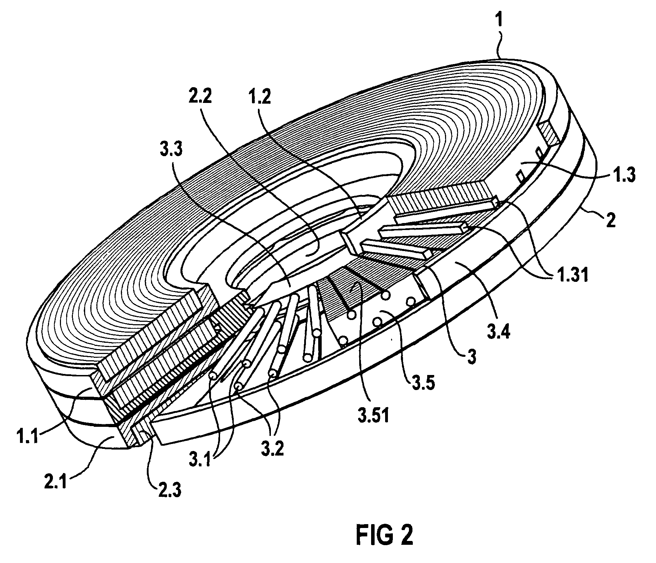

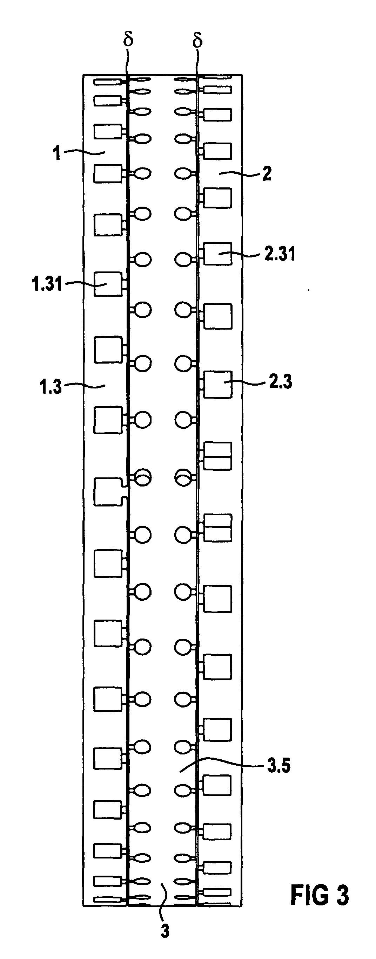

Zur Erhöhung der Leistungsdichte sind nach einer Ausgestaltung der Erfindung zwei axial beabstandete Ebenen von Kurzschlußstäben vorgesehen; erste Kurzschlußstäbe 3.1 sind in einer ersten Kurzschlußstab-Ebene dem ersten Ständerteil 1 zugewandt und zweite Kurzschlußstäbe 3.2 sind in einer axial dazu beabstandeten zweiten Kurzschlußstab-Ebene dem zweiten Ständerteil 2 zugewandt. Zur Minderung der Drehmomentenwelligkeit und/oder größeren axialen Kompaktheit sind die ersten Kurzschlußstäbe 3.1 gegenüber den zweiten Kurzschlußstäben 3.2 -wie aus der Schnittdarstellung gemäß FIG 2 ersichtlichtangential gegeneinander versetzt. Zum gleichen Zweck ist nach einer Ausgestaltung der Erfindung gemäß FIG 3 vorgesehen, die hier zur Verdeutlichung des Wesentlichen jeweils ohne Ständerwicklung dargestellten Nuten 1.31 des ersten Ständerteils 1 gegenüber den Nuten 2.31 des zweiten Ständerteils 2 tangential versetzt zueinander, insbesondere "auf mittige Lücke", anzuordnen.

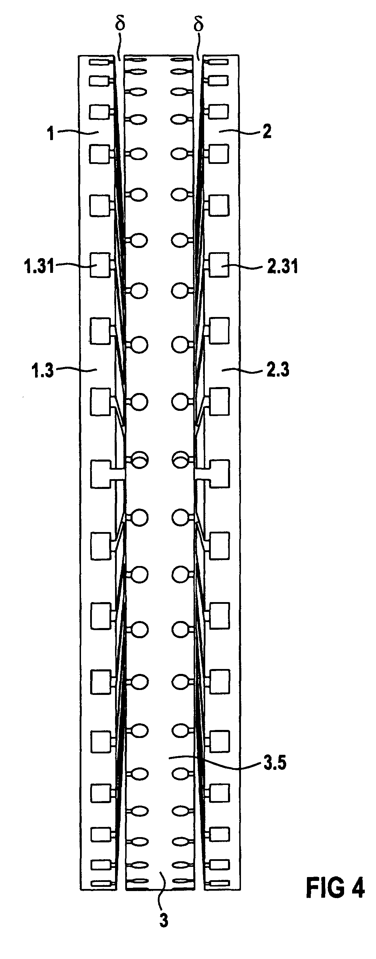

FIG 4 zeigt eine vorteilhafte Ausgestaltung der Erfindung mit einem gegenüber dem hinsichtlich eines fertigungstechnisch machbaren optimalen Maschinenmomentes, insbesondere nach radial außen, vergrößerten Luftspalts δ zwischen den axial benachbarten Blechpaketen 1.3;3.5 bzw. 2.3;3.5 des ersten Ständerteils 1 und des Scheibenläufers 3 bzw. des zweiten Ständerteils 2 und des Scheibenläufers 3, derart daß ein Seiten-Schlag des Scheibenläufers 3 aufgrund einer Taumelbewegung der diesen aufnehmenden Kurbelwelle 6 nicht zu einer schlagenden Berührung zwischen dem rotierenden Scheibenläufer 3 und den axial benachbarten Ständerteilen 1 bzw. 2 führt. Im vorliegenden Ausführungsbeispiel ist eine einerseits an den am Außenradius maximal möglichen Seiten-Schlag angepaßte jedoch andererseits durch möglichst engen Luftspalt δ momentenoptimale kegelförmige, sich nach radial außen öffnende Erweiterung des Luftspaltes δ durch entsprechende Reduzierung der axialen Höhe der Blechpakte 1.3 bzw. 2.3 der Ständerteile 1 bzw. 2 bei konstanter axialer Höhe des Blechpaktes 3.5 des Scheibenläufers 3 verwirklicht. Im Rahmen vorliegender Erfindung kann auch eine entsprechende Reduzierung der axialen Höhe des Scheibenläufers 3 allein oder zusammen mit der axialen Höhe der Ständerteile 1 bzw. 2 vorgesehen sein.

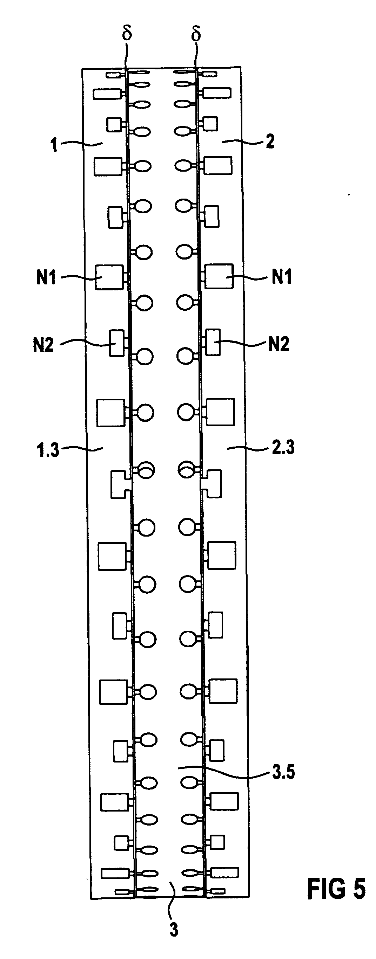

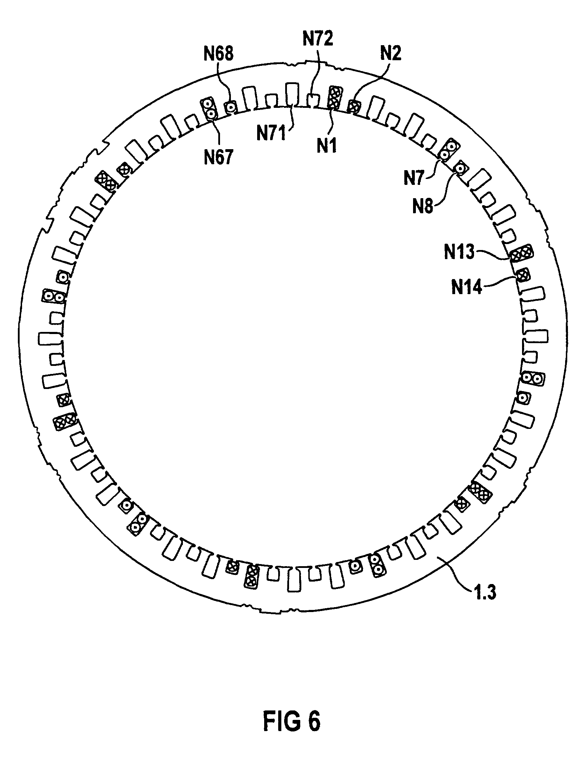

FIG 5,6 zeigt ein weiteres Ausführungsbeispiel der Erfindung mit über den Umfang des Ständerteils 1 bzw. 2 wechselweise unterschiedlich großen Nuten N1 bzw. N2, die zur fertigungstechnisch einfachen individuellen Auslegungsmöglichkeit der Drehmoment-Drehzahl-Kennlinie des Starter-Generators nach der in der deutschen Patentanmeldung Aktz. 198 45 520.8 bereits vorgeschlagenen Art gemäß der auf eine Blechlamelle eines axial geschichteten Blechpaketes in Mantelausführung bezogenen FIG 6 mit einer Wicklung mit sogenannten gebrochenen Leiterzahlen derart belegt sind, daß bei einer m-strängigen Ständerwicklung mit einer Statorspule mit jeweils zumindest drei Spulenseiten pro Pol und/oder Polpaare und einer kleinen unganzzahligen Wicklungszahl pro Pol und/oder Polpaar von den am Umfang insgesamt 72 Nuten N1-N72 eine erste, den größeren Teil der Spulenseiten aufnehmende, Nut N1 abwechselt mit einer den restlichen Teil der Spulenseiten aufnehmenden Nut N2. Im vorliegenden Fall ist eine Wicklung mit der gebrochenen bzw. unganzzahligen Windungszahl W = 1,5 dadurch verwirklicht, daß pro Polpaar in jeweils einer ersten Nut N1 bzw. N7 usw. zwei Spulenseiten und in einer zweiten Nut N7;N19 usw. die verbleibende Spulenseite eingewickelt sind; damit ergeben sich pro Polpaar und Strang mit der angenommenen und verteilten Spule drei Windungen W = 3 und somit eine magnetisch wirksame Windungszahl pro Pol von W = 1,5.

FIG 8 zeigt in Abänderung zu der bereits erläuterten Bauteilanordnung gemäß FIG 7 bei ansonsten im wesentlichen gleicher Ausführung die Anordnung des erfindungsgemäßen Starter-Generators an dem kühlerseitigen Ende der Verbrennungsmaschine 4 bzw. deren Kurbelwelle 6; unter Ausnutzung des erfindungsgemäß möglichen wesentlich geringeren Rotorgewichtes bzw. Rotorträgheitsmomentes ergeben sich dadurch schwingungs- sowie montage- und wartungstechnische Vorteile.

## Patentansprüche

1. Starter-Generator für ein Kraftfahrzeug
- mit einer Asynchronmaschine mit Scheibenläufer (3);
- mit einem Scheibenläufer (3) mit in einem Läuferblechpaket (3.5) angeordneter Käfigwicklung (3.1-3.4);
- mit einem dem Scheibenläufer (3) zugeordneten Ständer (1;2) mit in einem Ständerblechpaket (1.3;2.3) angeordneter Ständerwicklung.
- mit jeweils axial beidseitig des Scheibenläufers (3) im Sinne eines neutralisierten Axialzuges angeordnetem ersten Ständerteil (1) bzw. zweiten Ständerteil (2);
- mit dem ersten Ständerteil (1) zugeordneten bzw. zugewandten ersten Läuferkurzschlußstäben (3.1), in einer ersten axialen Kurzschlußstab-Ebene, und mit dem zweiten Ständerteil (2) zugeordneten bzw. zugewandten zweiten Läuferkurzschlußstäben (3.2), in einer zweiten axialen Kurzschlußstab-Ebene;
- mit einem tangentialen Versatz der ersten Läuferkurzschlußstäbe (3.1) gegenüber den zweiten Läuferkurzschlußstäben (3.2).

2. Starter-Generator nach Anspruch 1
- mit einer Anordnung des ersten Ständerteils (1) bzw. des zweiten Ständerteils (2) beidseitig des Scheibenläufers im Sinne eines neutralisierten Axialzuges.

3. Starter-Generator nach Anspruch 1 und/oder 2
- mit in Scheibenläuferumfang verlaufenden, in radialer Richtung zueinander isolierten, Blechen des Ständerblechpaketes (1.3;2.3) bzw. des Läuferblechpaketes (3.5).

4. Starter-Generator nach Anspruch 3
- mit aus in Umfangsrichtung spiralförmig gewickelten Blechstreifen gebildetem Ständerblechpaket (1.3;2.3) bzw. Läuferblechpaket (3.5).

5. Starter-Generator nach zumindest einem der Ansprüche 1-4
- mit radial zwischen einem radial inneren tangential umlaufenden Kurzschlußring (3.3) und einem radial äußeren tangential umlaufenden Kurzschlußring (3.4) in dem Läuferblechpaket (3.5) verlaufenden Läuferkurzschlußstäben (3.1;3.2).

6. Starter-Generator nach zumindest einem der Ansprüche 1-5
- mit radial zwischen einem radial äußeren Wickelkopf (1.1;2.1) und einem radial inneren Wickelkopf (1.2;2.2) im Ständerblechpaket (1.3) verlaufenden Nuten (1.31) zur Aufnahme einer Ständerwicklung mit den Wickelköpfen (1.1;1.2 bzw.2.1;2.2).

7. Starter-Generator nach zumindest einem der Ansprüche 1-6
- mit koaxial zur Achse der Kurbelwelle (6) einer Verbrennungsmaschine (4) des Kraftfahrzeuges angeordnetem Scheibenläufer (3);
- mit koaxial zur Achse der Kurbelwelle (6) der Verbrennungsmaschine (4) des Kraftfahrzeuges angeordnetem Ständer (1;2) bzw. erstem Ständerteil (1) und zweitem Ständerteil (2).

8. Starter-Generator nach zumindest einem der Ansprüche 1-7
- mit einer Anordnung axial zwischen der Verbrennungsmaschine (4) einerseits und einem Getriebe (5) andererseits, insbesondere mit am Maschinengehäuse (4.1) der Verbrennungsmaschine (4) befestigtem ersten Ständerteil (1) und am Gehäuse (5.1) des Getriebes (5) befestigtem zweiten Ständerteil (2) und axial zwischen dem ersten Ständerteil (1) und dem zweiten Ständerteil (2) angeordnetem Scheibenläufer (3).

9. Starter-Generator nach zumindest einem der Ansprüche 1-7
- mit einer Anordnung des Starter-Generators an dem vom getriebeseitigen Ende abgewandten kühlerseitigen Ende der Verbrennungsmaschine (4).

10. Starter-Generator nach zumindest einem der Ansprüche 1-9
- mit einem sich zumindest nach radial außen, insbesondere kegelförmig, erweiternden Luftspalt (δ) zwischen dem Scheibenläufer (3) und dem Ständer 1.2 bzw. dem ersten Ständerteil (1) bzw. dem zweiten Ständerteil (2).

11. Starter-Generator nach Anspruch 10
- mit einer erweiterten Ausbildung des Luftspaltes (δ) durch entsprechende Ausbildung des ersten Ständerteils (1) bzw. des zweiten Ständerteils (2) bei einem Scheibenläufer (3) mit über seine gesamte radiale Ausdehnung konstanter axialer Höhe.

12. Starter-Generator nach zumindest einem der Ansprüche 1-11
- mit einem tangentialen Versatz der Nuten (1.31) des ersten Ständerteils (1) gegenüber den Nuten (2.31) des zweiten Ständerteils (2).

13. Starter-Generator nach zumindest einem der Ansprüche 1-12
- mit einer m-strängigen Ständerwicklung;
- mit zumindest einer Ständerspule mit zumindest drei Spulenseiten pro Pol und/oder Polpaar;
- mit einer kleinen unganzzahligen Windungszahl pro Pol und/oder Polpaar;
- mit einem in Nuten (N1-N72) die m-strängige Ständerwicklung aufnehmenden Ständerblechpaket (1.3 bzw. 2.3);
- mit je Ständerblechpaket 1.3 bzw. 2.3 jeweils zumindest einer ersten, den größeren Teil der Spulenseiten aufnehmenden Nut (N1) und einer zweiten, den restlichen Teil der Spulenseiten aufnehmenden Nut (N2).

14. Starter-Generator nach Anspruch 13
- mit im Sinne einer minimalen Streuung bzw. maximalen Nutfüllung jeweils der Zahl der eingewickelten Spulenseiten angepaßte Nutfläche der ersten Nut (N1) bzw. der zweiten Nut (N2).

15. Starter-Generator nach Anspruch 14 und/oder 15
- mit einer wechselweisen Anordnung der ersten Nut (N1) und der zweiten Nut (N2) über den Umfang des Ständerblechpaketes (1.3 bzw. 2.3).

## Claims

1. Starter alternator for a motor vehicle,
- with an asynchronous machine with disc rotor (3)
- with a disc rotor (3) having a squirrel-cage winding (3.1-3.4) arranged in a laminated rotor core (3.5);
- with a stator (1; 2) assigned to the disc rotor (3) and having a stator winding arranged in a laminated stator core (1.3; 2.3);
- with a first stator part (1) and second stator part (2) in each case arranged axially on both sides of the disc rotor (3) with the effect of a neutralized axial train;
- with first rotor short-circuit bars (3.1) assigned to or facing the first stator part (1), in a first axial short-circuit bar plane, and with second rotor short-circuit bars (3.2) assigned to or facing the second stator part (2), in a second axial short-circuit bar plane;
- with a tangential offset of the first rotor short-circuit bars (3.1) in relation to the second rotor short-circuit bars (3.2).

2. Starter alternator according to Claim 1,
- with an arrangement at the first stator part (1) and of the second stator part (2) on both sides of the disc rotor with the effect of the neutralized axial train.

3. Starter alternator according to Claim 1 and/or 2,
- with laminations of the laminated stator core (1.3; 2.3) and of the laminated rotor core (3.5) which run along the disc-rotor circumference and are insulated from one another in the radial direction.

4. Starter alternator according to Claim 3,
- with a laminated stator core (1.3; 2.3) and laminated rotor core (3.5) which are formed from lamination strips wound spirally in the circumferential direction.

5. Starter alternator according to at least one of Claims 1 - 4,
- with rotor short-circuit bars (3.1; 3.2) which run radially between a radially inner tangentially continuous short-circuit ring (3.3) and a radially outer tangentially continuous short-circuit ring (3.4) in the laminated rotor core (3.5).

6. Starter alternator according to at least one of Claims 1 - 5,
- with slots (1.31) running radially between a radially outer winding overhang (1.1; 2.1) and a radially inner winding overhang (1.2; 2.2) in the laminated stator core (1.3) and intended for receiving a stator winding having the winding overhangs (1.1; 1.2 and 2.1; 2.2).

7. Starter alternator according to at least one of Claims 1 - 6,
- with a disc rotor (3) arranged coaxially to the axis of the crankshaft (6) of an internal combustion engine (4) of the motor vehicle;
- with a stator (1; 2) or first stator part (1) and second stator part (2) arranged coaxially to the axis of the crankshaft (6) of the internal combustion engine (4) of the motor vehicle.

8. Starter alternator according to at least one of Claims 1 - 7,
- with an arrangement axially between the internal combustion engine (4), on the one hand, and a transmission (5), on the other hand, in particular with a first stator part (1) fastened to the engine housing (4.1) of the internal combustion engine (4) and a second stator part (2) fastened to the housing (5.1) of the transmission (5) and with a disc rotor (3) arranged axially between the first stator part (1) and the second stator part (2).

9. Starter alternator according to at least one of Claims 1 - 7,
- with an arrangement of the starter alternator at the radiator-side end of the internal combustion engine (4), said end facing away from the transmission-side end.

10. Starter alternator according to at least one of Claims 1 - 9,
- with an air gap (δ) widening at least radially outwards, in particular conically, between the disc rotor (3) and the stator (1.2) or the first stator part (1) and the second stator part (2).

11. Starter alternator according to Claim 10,
- with a widened design of the air gap (δ) due to a corresponding design of the first stator part (1) or of the second stator part (2) in the case of a disc rotor (3) with an axial height which is constant over its entire radial extent.

12. Starter alternator according to at least one of Claims 1 - 11,
- with a tangential offset of the slots (1.31) of the first stator part (1) in relation to the slots (2.31) of the second stator part (2).

13. Starter alternator according to at least one of Claims 1 - 12,
- with an m-phase stator winding;
- with at least one stator coil having at least three coil sides per pole and/or pair of poles;
- with a small non-integral number of turns per pole and/or pair of poles;
- with a laminated stator core (1.3 or 2.3) receiving the m-phase stator winding in slots (N1-N72);
- with, for each laminated stator core (1.3 or 2.3), in each case at least one first slot (N1) receiving the greater part of the coil sides and one second slot (N2) receiving the remaining part of the coil sides.

14. Starter alternator according to Claim 13,
- with a slot area of the first slot (N1) or of the second slot (N2) which is in each case adapted to the number of wound-in coil sides for the purpose of minimum leakage or maximum slot packing.

15. Starter alternator according to Claim 14 and/or 15,
- with an alternate arrangement of the first slot (N1) and of the second slot (N2) over the circumference of the laminated stator core (1.3 or 2.3).

## Revendications

1. Démarreur-altemateur pour un véhicule automobile,
- comportant une machine asynchrone à rotor (3) à disque ;
- comportant un rotor (3) à disque ayant un enroulement (3.1 à 3.4) à cage d'écureuil monté dans un paquet (3.5) de tôles rotoriques ;
- comportant un stator (1 ; 2) associé au rotor (3) à disque et ayant un enroulement statorique monté dans un paquet (1.3 ; 2.3) de tôles statoriques ;
- comportant une première pièce (1) de stator et une deuxième pièce (2) de stator montées respectivement axialement de part et d'autre du rotor (3) à disque ;
- des premiers barreaux (3.1) de court-circuit du rotor associés à la première pièce (1) de stator et tournés vers elle, dans un premier plan axial de barreaux de court-circuit et des deuxièmes barreaux (3.2) de court-circuit du rotor associés à la deuxième pièce (2) de stator et tournés vers elle, dans un deuxième plan axial de barreaux de court-circuit ;
- comportant un décalage tangentiel des premiers barreaux (3.1) de court-circuit de rotor par rapport aux deuxièmes barreaux (3.2) de court-circuit de rotor.

2. Démarreur-alternateur suivant la revendication 1
- comportant un montage de la première pièce (1) de stator et de la deuxième pièce (2) de stator de part et d'autre du rotor à disque en vue d'une neutralisation de la traction axiale.

3. Démarreur-alternateur suivant la revendication 1 et/ou 2
- comportant des tôles du paquet (1.3 ; 2.3) de tôles statoriques et du paquet (3.5) de tôles rotoriques s'étendant sur le pourtour du rotor à disque et isolées les unes par rapport aux autres dans la direction axiale.

4. Démarreur-alternateur suivant la revendication 3
- comportant un paquet (1.3 ; 2.3) de tôles statoriques et un paquet (3.5) de tôles rotoriques formés des bandes de tôles enroulées en spirale dans la direction périphérique.

5. Démarreur-alternateur suivant au moins l'une des revendications 1 à 4
- comportant des barreaux (3.1 ; 3.2) de court-circuit du rotor s'étendant radialement, entre une bague (3.3) de court-circuit s'étendant tangentiellement radialement à l'intérieur et une bague (3.4) de court-circuit entourant tangentiellement radialement à l'extérieur, dans le paquet (3.5) de tôles rotoriques.

6. Démarreur-alternateur suivant au moins l'une des revendications 1 à 5
- comportant des encoches (1.31) s'étendant radialement entre une tête (1.1 ; 2.1) d'enroulement radialement extérieur et une tête (1.2 ; 2.2) d'enroulement radialement intérieur dans le paquet (1.3) de tôles statoriques, pour la réception d'un enroulement statorique ayant les têtes (1.1 ; 1.2 et 2.1 ; 2.2) d'enroulement.

7. Démarreur-alternateur suivant au moins l'une des revendications 1 à 6
- comportant un rotor (3) à disque monté coaxialement à l'axe du vilebrequin (6) d'un moteur (4) à combustion interne du véhicule automobile;
- comportant un rotor (1 ; 2) ou une première pièce (1) de rotor et une deuxième pièce (2) de rotor montées coaxialement à l'axe du vilebrequin (6) du moteur (4) à combustion interne du véhicule automobile.

8. Démarreur-alternateur suivant au moins l'une des revendications 1 à 7
- comportant un montage axialement entre le moteur (4) à combustion interne d'une part et une boîte (5) de vitesses d'autre part, notamment en ayant une première pièce de stator fixée au carter (4.1) de moteur (4) de combustion interne et une deuxième pièce de stator fixée au carter (5.1) de la boîte (5) de vitesses et en ayant un rotor (3) à disque monté entre la première pièce (1) de stator et la deuxième pièce (2) de stator.

9. Démarreur-alternateur suivant au moins l'une des revendications 1 à 7
- ayant un montage du démarreur-alternateur à l'extrémité du moteur (4) à combustion interne située du côté du radiateur et éloignée de l'extrémité située du côté de la boîte de vitesses.

10. Démarreur-alternateur suivant au moins l'une des revendications 1 à 9
- comportant un entrefer (δ) s'élargissant au moins radialement vers l'extérieur, notamment en forme de cône, entre le rotor (3) à disque et le stator (1.2) ou la première pièce (1) de stator et la deuxième pièce (2) de stator.

11. Démarreur-alternateur suivant la revendication 10
- comportant un élargissement de l'entrefer (δ) par une réalisation en conséquence de la première pièce (1) de stator et de la deuxième pièce (2) de stator pour un rotor (3) à disque ayant une hauteur axiale constante sur toute son étendue radiale.

12. Démarreur-alternateur suivant au moins l'une des revendications 1 à 11
- comportant un décalage tangentiel des encoches (1.31) de la première pièce (1) de stator par rapport aux encoches (2.31) de la deuxième pièce (2) de stator.

13. Démarreur-alternateur suivant au moins l'une des revendications 1 à 12
- comportant un enroulement statorique à m branches ;
- comportant au moins une bobine statorique ayant au moins trois côtés de bobine par pôle et/ou paire de pôles ;
- comportant un petit nombre non entier de spires par pôle et/ou paire de pôles ;
- comportant un paquet (1.3 et 2.3) de tôles statoriques recevant l'enroulement statorique à m branches dans des encoches (N1 à N72) ;
- comportant pour chaque paquet (1.3 et 2.3) de tôles statoriques chaque fois au moins une première encoche (N1) recevant la plus grande partie des côtés de bobine et une deuxième encoche (N2) recevant la partie restante des côtés de bobine.

14. Démarreur-alternateur suivant la revendication 13
- ayant, en vue d'une dispersion minimum et d'une utilisation maximum des encoches, chaque fois une surface d'encoche de la première encoche (N1) et de la deuxième encoche (N2) adaptée au nombre des côtés de bobine enroulés.

15. Démarreur-alternateur suivant la revendication 14 et/ou 15
- comportant une disposition en altemance de la première encoche (N1) et de la deuxième encoche (N2) sur le pourtour du paquet (1.3 et 2.3) de tôles statoriques.
